# FASCICULE DE BREVET EUROPEEN

(11) **EP 0 965 724 B1**
(45) Date de publication et mention de la délivrance du brevet: **06.10.2004**
(21) Numéro de dépôt: 99490016.5
(22) Date de dépôt: 18.06.1999
(51) Int. Cl.: E06B 9/88, G01D 5/245, G01D 5/14, E06B 9/72

(54) **Dispositif d'entraînement d'un organe tubulaire mobile en rotation bi-directionnellement, tambour de volet roulant équipé d'un tel dispositif d'entraînement et volet roulant équipé d'un tel tambour.**
Antriebsvorrichtung einer in zwei Richtungen drehbaren rohrförmigen Walze, Rolladenwalze mit einer derartigen Antriebsvorrichtung, Rolladen mit einer derartigen Walze
Driving device for a bi-directionally rotatable tubular roll, drum of roller shutter equipped with such driving device, roller shutter equipped with such winding drum

(30) Priorité: 19.06.1998 FR 9807944
(43) Date de publication de la demande: 22.12.1999
(73) Titulaire: DEPRAT Jean S.A., 59115 Leers (FR)
(72) Inventeur: Sudron, Serge, 59115 Leers (FR)
(74) Mandataire: Duthoit, Michel

(56) Documents cités:
- EP-A- 0 552 459
- EP-A- 0 678 646
- EP-A- 0 822 315
- DE-A- 4 311 267
- DE-A- 4 440 449
- FR-A- 2 557 397
- FR-A- 2 673 234

## Description

La présente invention concerne un dispositif d'entraînement d'un organe tubulaire mobile en rotation bi-directionnellement, un tambour de volet roulant équipé d'un tel dispositif d'entraînement et un volet roulant équipé d'un tel tambour.

Bien que plus particulièrement prévue pour des applications dans le domaine des volets roulants, l'invention pourra également être utilisée dans tous les domaines de l'activité économique dans lesquels on souhaite entraîner un organe tubulaire mobile en rotation bi-directionnellement.

Actuellement, on connaît des dispositifs permettant de suivre la course d'un organe mobile entraîné selon deux directions opposées. Ils ont pour but, notamment, de détecter l'arrivée de l'organe à un niveau donné afin de pouvoir limiter sa trajectoire entre deux points extrêmes.

Dans le domaine des volets roulants, on connaît ainsi, par exemple, des dispositifs d'entraînement équipés de moyens de contrôle mécaniques tels que des jeux de réducteur à engrenage entraînés par le tambour du volet roulant.

Ceux-ci coopèrent avec différents éléments d'indexage permettant de caractériser la position du tambour et, lorsque celui-i est arrivé en fin de course, d'empêcher sa rotation, à l'aide de systèmes de blocage.

Un premier inconvénient de telles solutions est qu'elles nécessitent l'utilisation d'un grand nombre de pièces mécaniques, en contact les unes avec les autres, susceptibles d'usure et posant des problèmes d'étanchéité.

On connaît du document EP-A-0.552.459 un dispositif d'entraînement d'un organe tubulaire, notamment tambour de volet roulant, mobile en rotation bidirectionnellement autour de son axe longitudinal, selon le préambule de la revendication 1.

Néanmoins, ce dispositif ne permet pas de constituer des fins de course en tant que tel car il ne permet pas de détecter le sens de variation de l'organe mobile.

On connaît du document DE-A-43 11 267 un moteur équipé d'une roue magnétique multipolaire apte à coopérer avec deux capteurs pour connaître la position angulaire du rotor ainsi que le sens de rotation.

Néanmoins, cette technique ne peut être utilisée telle quelle sans la présence d'un jeu de réducteurs ni une adaptation spécifique au volet roulant.

Le but de la présente invention est de proposer un dispositif d'entraînement d'un organe tubulaire, notamment tambour de volet roulant, mobile en rotation bi-directionnellement qui permette de pallier les inconvénients précités et dont les risques d'usure soient diminués.

Un autre but de la présente invention est de proposer un dispositif d'entraînement d'un organe tubulaire, notamment tambour de volet roulant, mobile en rotation bi-directionnellement, dans lequel le nombre de pièces mécaniques puisse être limité.

Un autre but de la présente invention est de proposer un dispositif d'entraînement d'un organe tubulaire, notamment tambour de volet roulant, mobile bi-directionnellement, qui puisse être étanche.

D'autres buts et avantages de l'invention apparaîtront au cours de la description qui va suivre qui n'est donnée qu'à titre indicatif et qui n'a pas pour but de la limiter.

La présente invention concerne un dispositif d'entraînement d'un organe tubulaire, notamment tambour de volet roulant, mobile en rotation bi-directionnellement autour de son axe longitudinal, tel que défini dans la revendication 1.

La présente invention concerne en outre un tambour de volet roulant, muni d'un tel dispositif d'entraînement, et un volet roulant muni d'un tel tambour.

L'invention sera mieux comprise à la lecture de la description suivante, accompagnée des dessins en annexe qui en font partie intégrante et parmi lesquels :
- la figure 1 illustre, en perspective, une pièce d'un exemple de réalisation du dispositif d'entraînement conforme à l'invention,
- les figures 2a à 2c illustrent, sur un exemple, le principe de fonctionnement de la détection des mouvements de l'organe mobile, réalisée selon le dispositif d'entraînement conforme à l'invention,

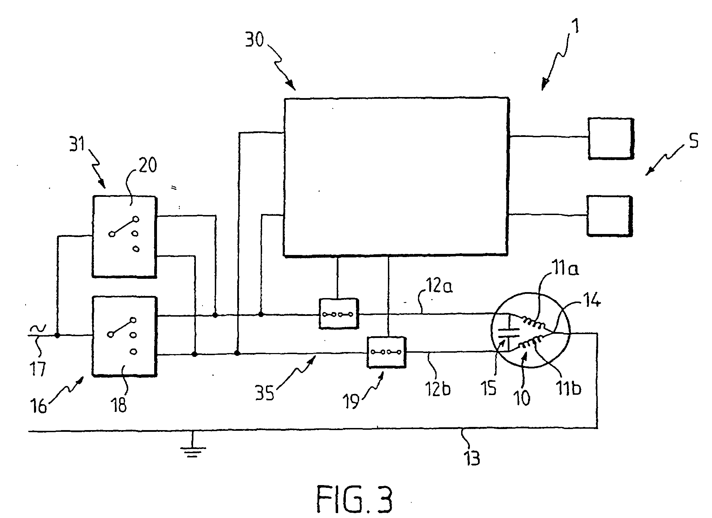

- la figure 3 illustre, de manière schématique, le câblage du moteur éventuellement utilisé dans le dispositif d'entraînement conforme à l'invention,
- la figure 4 illustre, selon un plan de coupe diamétral, un exemple de dispositif d'entraînement conforme à l'invention,
- la figure 5 illustre, selon un plan de coupe diamétral, un tambour monté sur l'exemple de dispositif d'entraînement de la figure 4 précédente,
- la figure 6 illustre un détail repéré VILS à la figure 5

La présente invention concerne un dispositif d'entraînement d'un organe tubulaire, notamment tambour de volet roulant, mobile en rotation bi-directionnellement.

Toutefois, bien que plus particulièrement prévue pour de telles applications, elle pourra tout à fait être utilisée dans tous les autres secteurs de l'activité économique dans lesquels on est amené à entraîner un organe tubulaire mobile en rotation bi-directionnellement.

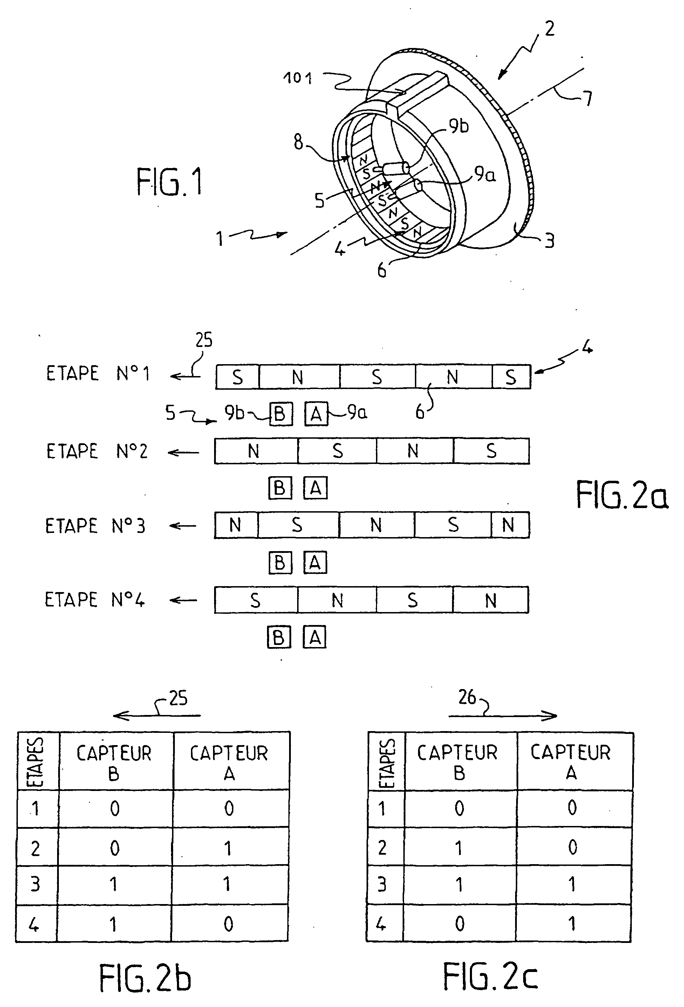

Comme illustré aux figures 1 et 4 à 6, ledit dispositif comprend, selon l'invention, un système de contrôle de la position dudit organe mobile 2, muni de premiers moyens 4 pour créer un signal physique périodique, notamment un flux magnétique périodique, et de seconds moyens 5 pour détecter sans contact les variations dudit signal et pour repérer le sens de description de la période, l'un desdits premiers ou seconds moyens 4, 5 étant prévu entraîné, directement ou indirectement, par ledit organe mobile 2, et l'autre desdits premiers ou seconds moyens 4, 5 étant prévu fixe en vis-à-vis.

Grâce au suivi du signal, à la fois en sens et en valeur, il est ainsi possible de connaître, à tout moment souhaité, la trajectoire de l'organe mobile 2, ceci sans engendrer d'usure mécanique au niveau des détecteurs 4, 5 choisis. En effet, la détection du signal choisi peut s'opérer sans contact.

Toujours selon l'invention, ledit dispositif d'entraînement est constitué notamment d'un moyen support destiné à être introduit dans ledit organe mobile pour permettre sa rotation, ledit moyen support, prévu tubulaire, accueillant intérieurement :
- des moyens moteurs pour la rotation dudit organe mobile,
- des moyens de commande desdits moyens moteurs en fonction d'informations provenant au moins dudit système de contrôle de la position de l'organe mobile,
- l'un desdits premier ou second moyens dudit système de contrôle de la position de l'organe mobile,
l'autre desdits premiers ou second moyens étant monté, en vis-à-vis, mobile en rotation autour dudit moyen support de manière à pouvoir coopérer avec ledit organe mobile.

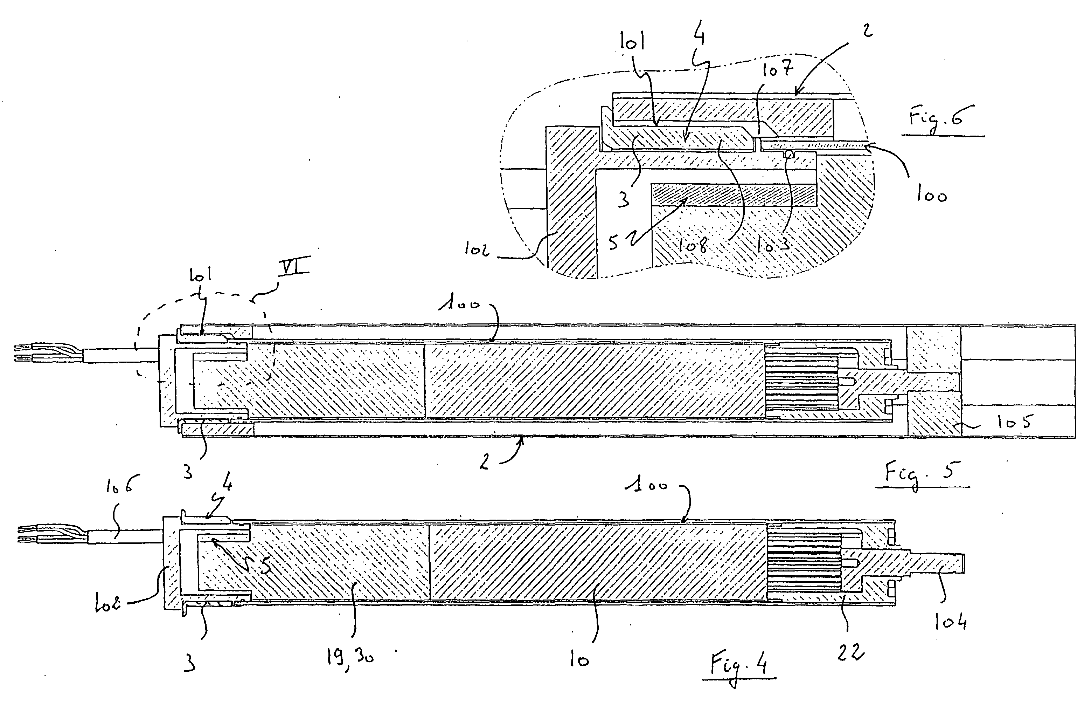

Comme le montrent les figures 4 et 5, on dispose ainsi d'un sous-ensemble prêt-à-monter dans ledit organe mobile 2 qui pourra aussi bien être neuf qu'un organe dont on rénove l'entraînement.

De plus, l'utilisation d'un système de détection à distance permet d'assurer l'étanchéité de l'intérieur des moyens support, ce qui est primordial puisqu'ils contiennent les composants électriques et électroniques des moyens moteurs et de commande intégrés dans ledit sous-ensemble.

Lesdits moyens support sont constitués par exemple d'un tube de section circulaire accueillant les uns à côté des autres lesdits moyens de commande 19, 30, un moteur 10 et un réducteur 22 dont l'axe mobile 104 est prévu débouchant pour coopter avec ledit organe mobile 2 par l'intermédiaire d'une pièce de transmission de l'entraînement 105.

Lesdits moyens 4 pour créer un signal sont constitués, notamment, par une succession de pôles d'aimants 6. Ceux-ci sont, éventuellement, répartis régulièrement.

Il s'agit, notamment, d'une alternance de pôles nord et sud ou encore d'une alternance de pôles nord et/ou sud et de zones non magnétiques.

Selon un premier exemple de réalisation, non illustré, lesdits moyens 4 pour créer un signal sont constitués d'un aimant bi-polaire et/ou de pôles nord et sud d'aimants alternant ponctuellement les uns avec les autres sur une surface support.

Selon un autre mode de réalisation, correspondant notamment à celui illustré, lesdits pôles d'aimants 6 sont prévus jointifs.

Lesdits aimants 6 sont ainsi, par exemple, prévus répartis de manière circulaire autour d'un axe destiné à définir l'axe de rotation 7 de l'organe mobile 2.

La succession de pôles nord et sud d'aimants 6 est constituée, par exemple, de manière connue, de caoutchouc magnétique, d'une bande magnétique, d'aimants permanents et/ou de matériaux ayant subi une aimantation par induction. Il peut encore s'agir, éventuellement, de matières aimantées moulées, surmoulées ou obtenues par frittage selon la forme voulue.

Ladite succession de pôles nord et sud d'aimants 6 est montée sur son support, par exemple, par collage, rivetage, vissage, surmoulage, clipsage, encastrement ou autres.

Selon le mode de réalisation illustré, il s'agit d'une couronne de caoutchouc magnétique collée à l'intérieur de ladite pièce mécanique 3.

Selon un premier mode de réalisation, les moyens 5 pour détecter sans contact les variations du signal et pour repérer le sens de description de la période sont prévus mobiles tandis que la succession de pôles d'aimants 6 est prévue fixe en vis-à-vis.

Selon un autre mode de réalisation, correspondant notamment à celui illustré, cela pourra être le contraire, comme cela est développé plus loin.

Lesdits moyens 5 pour détecter sans contact le signal et pour repérer le sens de description de la période sont constitués, par exemple, d'au moins deux capteurs 9a, 9b de flux magnétique.

Ceux-ci détectent la variation périodique du champ magnétique engendré par ladite succession de pôles nord et sud d'aimants 6, prévus en vis-à-vis.

Il s'agit, notamment, de capteurs de type inductif, à effet Hall, à ampoule reed ou autres. Ils pourront, éventuellement, être protégés dans de la résine.

Ils sont disposés, notamment, radialement, intérieurement et/ou extérieurement auxdits moyens de création 4 du signal lorsque ceux-ci sont par exemple prévus en anneaux.

Lesdits capteurs 9a, 9b pourront encore, éventuellement, être situés axialement, notamment lorsque lesdits moyens de création du signal 4 sont situés sur l'une et/ou l'autre faces d'un support en forme de disque, par exemple centré sur ledit axe de rotation 7.

Selon le mode de réalisation illustré, ils sont prévus orientés radialement et disposés intérieurement. Une telle solution permet, entre autres de limiter l'encombrement, lesdits capteurs 9a, 9b pouvant alors être associés à des moyens de traitement prévus intérieurement dans l'organe mobile 2 tubulaire.

Lesdits capteurs 9a, 9b sont, par exemple, prévus espacés de manière à pouvoir repérer deux successions de signaux différents en fonction du sens de déplacement de l'organe mobile 2 et donc du sens de description de la période des variations du flux magnétique.

Comme illustré à la figure 2a où la succession de pôles nord et sud d'aimants 6 a été représentée de manière rectiligne dans quatre étapes successives, la disposition des capteurs 9a, 9b est réalisée de façon à ce que l'un et l'autre reçoivent une information magnétique s'alternant de manière distincte.

Pour cela, ils sont mis, notamment, soit côte à côte, soit à des distances calculées afin de pouvoir, dans une première position, se trouver simultanément en vis-à-vis d'un ou de pôles de même nature, soit nord, soit sud, et dans une deuxième position, se trouver simultanément en vis-à-vis de deux pôles de natures différentes.

Les figures 2b et 2c illustrent sous forme d'informations binaires les signaux lus par les capteurs 9a, 9b en fonction des quatre étapes représentées à la figure 2a.

Le tableau 2b correspond à un sens donné, repéré 25, de déplacement des moyens de création 4 du signal tandis que le tableau 2c correspond au sens opposé, repéré 26.

Naturellement, le suivi des inversions périodiques du flux magnétique peut être étendu, selon le même principe, au-delà des quatre étapes représentées aux figures 2a à 2c.

On constate que l'on effectue bien ainsi à la fois un repérage de la position desdits moyens 4 de création du signal et par suite de leur support et donc dudit organe mobile 2, ainsi qu'un repérage du sens de rotation de ce dernier.

A ce sujet, concernant la lecture des signaux, l'information relevée par les capteurs 9a, 9b est par exemple, traduite sous forme d'impulsions électriques, notamment des variations de tension et/ou de courant, avec des états successifs correspondant à zéro ou un, en fonction du pôle présent en face du capteur considéré.

Lesdits moyens 4 pour créer le signal périodique sont prévus, par exemple au niveau d'une bague 3, constituée au moins en partie d'un matériau apte à subir une aimantation par induction pour définir une succession de pôles nord et/ou sud d'aimants, répartis en couronne, selon l'axe longitudinal de ladite bague 3.

Ladite bague 3 est prévue notamment tournante par rapport audit moyen support 100, et munie de moyens 101 pour coopérer avec ledit organe mobile 2, tels que notamment une clavette, de manière à ce que ses mouvements soient l'image des mouvements dudit organe mobile 2.

Lesdits moyens 5 pour détecter les variations du signal et pour repérer le sens de description de sa période sont prévue, par exemple, à l'intérieur dudit moyen support.

Lesdits moyens 4 pour créer le signal et lesdits moyens 5 pour détecter les variations du signal et pour repérer le sens de description de sa période sont, notamment, prévues à l'une des extrémités dudit moyen support 100, dite première extrémité.

Ladite première extrémité est, notamment, munie d'un bouchon 102 pour ledit moyen support 100. Un joint d'étanchéïté 103 est prévu entre ledit bouchon et ledit moyen support 100.

L'étanchéïté de cette disposition est alors indépendante des premiers (4) et seconds (5) moyens dudit système de contrôle de la position de l'organe mobile.

Les moyens de commande comprennent, en outre, éventuellement, des moyens de traitement 30, aptes au moins à donner une image numérisée de la position dudit organe mobile 2 en fonction des informations relevées par lesdits moyens 5 pour détecter les variations du signal et repérer le sens de description de sa période.

Dans le cas de l'utilisation d'un capteur bi-polaire, l'absence d'aimantation pourra également être assimilée à une information spécifique.

Selon un autre mode de réalisation alternatif, non illustré, il pourra également être prévu d'utiliser une série de capteurs, formant notamment une couronne, en vis-à-vis de pôles magnétiques nord et sud, éventuellement fixes.

De manière à pouvoir détecter les arrivées en fin de course de l'organe mobile 2, lesdits moyens de commande présentent, éventuellement, des moyens de comparaison de la position dudit organe avec des positions de fin de course enregistrées.

En outre, afin de faciliter ses utilisations, ils pourront être munis de moyens de réglage et d'enregistrement desdites positions de fin de course.

Pour cela, les moyens de traitement 30 sont prévus aptes à fonctionner selon deux modes différents, l'un dit « normal » et l'autre dit de « réglage ». Le premier autorise, par exemple, le suivi et le blocage de l'organe mobile lorsqu'il arrive au niveau des positions de fin de course enregistrées tandis que le second autorise, notamment, le réglage et/ou la modification de celles-ci.

En outre, des moyens électriques 31 de sélection du mode d'utilisation des moyens de traitement 30 sont prévus, lesdits moyens électriques 31 étant aptes en outre à autoriser la sélection des positions de fin de course pour leur mémorisation, lorsque l'organe mobile est arrivé à la position désirée.

L'utilisation d'un signal numérisé pour le suivi des positions de l'organe mobile, de moyens numériques de traitement et de moyens de sélection de nature électrique permet ainsi, par exemple, la réalisation de câblages électriques, autorisant le réglage à distance des positions de fin de course et facilitant les interventions des opérateurs.

Lesdits moyens de traitement 30 sont prévus aptes à réaliser, par exemple, des fonctions de comptage à partir du signal donnant l'image de la position de l'organe. Ils sont munis pour cela, notamment, d'un ou plusieurs compteurs.

Lesdits moyens de traitement 30 permettent également, par exemple, la comparaison de la valeur du ou des compteurs avec une valeur correspondant aux positions de fin de course, celles-ci étant prévues stockées, notamment, dans une mémoire.

Lesdits moyens de traitement 30 permettent encore, par exemple, le stockage des valeurs de fin de course réglées dans ladite mémoire et/ou l'émission d'ordre de blocage de l'organe mobile en cas de correspondance entre les valeurs figurant dans le ou les compteurs et celles stockées dans la mémoire.

Lesdits moyens de traitement 30 sont en outre prévus aptes, par exemple, à autoriser une commutation de leur fonctionnement entre le mode « normal » et le mode « réglage », notamment en utilisant des données d'entrée établies à partir de courant électrique permettant également la mise en mouvement de l'organe mobile.

En mode « normal », lesdits moyens de traitement 30 réalisent ainsi, par exemple, les fonctions de comptage, comparaison des valeurs comptées avec les valeurs de fin de course, et émission d'ordre de blocage en cas de correspondance, tandis qu'en mode « réglage », la fonction de comparaison des valeurs comptées avec les valeurs de fin de course est éventuellement inhibée et remplacée par la fonction de stockage des nouvelles valeurs de fin de course réglées.

Ainsi, en entrée, lesdits moyens de traitement 30 prennent en compte, par exemple, le ou les signaux donnant l'image de la position de l'organe mobile et/ou le ou les signaux déterminant leur mode de fonctionnement. En sortie, ils émettent, par exemple, les ordres de blocage dudit organe mobile.

Lesdits moyens de traitement 30 comprennent, par exemple, un microprocesseur, apte à mettre en oeuvre un logiciel permettant la réalisation, notamment, desdites fonctions de comptage, comparaison, stockage, commutation et/ou d'émission d'ordre de blocage.

Lesdits compteurs sont constitués, par exemple, d'un compteur de position de l'organe mobile, d'un compteur de fin de course et/ou d'un compteur de temps.

Afin d'éviter le réglage des positions de fin de course par une indication brute et théorique des valeurs de compteur pour lesquelles l'organe mobile doit être bloqué, lesdits moyens de sélection 31 sont éventuellement prévus aptes à permettre le réglage des positions de fin de course à la volée, c'est-à-dire lors du déplacement réel de l'organe mobile.

Les valeurs mémorisées correspondent alors, par exemple, à la valeur du compteur après l'arrêt dudit organe mobile au niveau de la position que l'on souhaite enregistrer en tant que position de fin de course.

Cela étant, ledit dispositif d'entraînement comprend, par exemple, des moyens moteur 10 d'entraînement de l'organe mobile et/ou des moyens de sélection 16 du mode de fonctionnement desdits moyens moteur 10.

Lesdits moyens de sélection 16 du mode de fonctionnement desdits moyens moteur 10 permettent à un opérateur de choisir, par exemple, le sens de déplacement dudit organe mobile et/ou le maintien à l'arrêt de celui-ci.

Selon un mode de réalisation de l'invention correspondant à celui illustré, lesdits moyens de traitement 30 sont connectés par montage en dérivation sur une ligne d'alimentation 35 prévue entre lesdits moyens moteur 10 et lesdits moyens de sélection 16 du mode de fonctionnement desdits moyens moteur 10.

Ladite ligne d'alimentation 35 est constituée par exemple, de deux câbles 12a, 12b permettant chacun l'alimentation desdits moyens moteur 10 pour un fonctionnement selon un sens donné.

Lesdits moyens de sélection 16 du mode de fonctionnement desdits moyens moteur 10 sont, par exemple, connectés au réseau, repéré 17, et sont, éventuellement, prévus aptes à isoler ladite ligne d'alimentation 35 de celui-ci. On évite ainsi que le dispositif de contrôle soit en permanence alimenté. De plus, une telle disposition permet, si désirée, de contrôler plusieurs moteurs à partir d'un point de commande unique.

Pour permettre le réglage desdites positions de fin de course, les moyens de sélection 31 du mode de fonctionnement des moyens de traitement 30 et de la position de fin de course sont constitués de moyens de mise sous tension simultanée des câbles 12a, 12b. Ladite mise sous tension est prévue temporaire. Elle cesse, par exemple, lorsque l'organe mobile est arrivé à la position désirée pour définir une position de fin de course.

Il s'agit, notamment, desdits moyens de sélection 16 du mode de fonctionnement des moyens moteur 10 prévus, par exemple, dédoublés en parallèle.

On peut ainsi disposer de quatre états différents à l'entrée des moyens de traitement 30 permettant alternativement le passage de ces derniers entre le mode de fonctionnement « normal » et le mode de fonctionnement « réglage », ceci pour chacun des sens de déplacement de l'organe mobile, et autorisant le réglage des positions de fin de course aux extrémités de sa trajectoire.

Lesdits moyens moteur sont constitués, notamment, d'un moteur présentant, par exemple, deux enroulements 11a,11b permettant chacun sa rotation dans un sens donné.

Lesdits enroulements 11a, 11b, sont prévus, notamment, entre un des câbles 12a, 12b, formant une ligne de phase et une ligne de neutre 13, éventuellement connectée à un point commun 14 prévu entre lesdits enroulements 11a, 11b.

Une capacité 15 est, par exemple, prévue au niveau desdits enroulements 11a, 11b entre leurs bornes opposées au point commun 14.

Lesdits moyens de commande comprennent en outre, par exemple, des moyens de blocage 19 desdits moyens moteur 10. Ils sont constitués, notamment, d'un organe coupe circuit prévu sur chacun des câbles 12a, 12b.

Ils sont prévus aptes à être déclenchés, par exemple, à partir de l'ordre de blocage éventuellement émis par lesdits moyens de traitement 30.

Lesdits moyens de sélection 16 du mode de fonctionnement desdits moyens moteur 10 et/ou lesdits moyens de sélection 31 du mode de fonctionnement des moyens de traitement 30 et des positions de fin de course sont constitués, par exemple, d'un commutateur à trois positions. Celui-ci est situé, notamment, entre le secteur 17 et ladite ligne d'alimentation 35.

Ledit commutateur pourra être constitué, par exemple, pour lesdits moyens 16 de sélection du mode de fonctionnement des moyens moteur 10, d'un borgnier 18, et pour lesdits moyens 31 du mode de sélection des moyens de traitement 30, d'un micro-interrupteur 20.

Ils présentent chacun, notamment, une borne reliée au secteur 17 et trois bornes reliables à la ligne d'alimentation 35.

Pour le borgnier 18, l'une des bornes correspond à un sens de déplacement de l'organe mobile, la seconde à l'autre sens de déplacement de celui-ci et la troisième à l'arrêt des moyens moteur.

Pour le micro-interrupteur 20, une première des bornes correspond au mode de réglage d'une première position de fin de course, une seconde au mode de réglage de la seconde position de fin de course et la troisième borne au mode de fonctionnement normal.

A titre d'exemple, pour régler l'une des valeurs de fin de course, l'opérateur actionne le borgnier 18 pour connecter la ligne de phase 12a avec le secteur et permettre le déplacement de l'organe mobile dans la direction concernée. Simultanément, l'autre ligne de phase 12b est coupée à l'aide du coupe circuit 19 prévu sur celle-ci.

L'opérateur actionne ensuite le micro-interrupteur 20 de manière à connecter le secteur et l'autre ligne de phase 12b.

Les moyens de traitement 30 étant branchés en dérivation sur lesdites lignes de phase 12a, 12b, ils constatent alors l'apparition en entrée d'un état différent de l'état normal, chacune desdites lignes 12a, 12b étant alimentée, au lieu d'une seule, en amont des moyens de blocage 19. Le mode de réglage des fins de course est ainsi actionné.

Lorsque l'opérateur juge que l'organe mobile, continuant sa course, aura atteint le point extrême désiré, il pourra alors basculer le borgnier 18 et/ou le micro-interrupteur 20 sur la position correspondant à l'arrêt du moteur et/ou au mode de fonctionnement normal tandis que le microprocesseur coupera le moteur et mettra en mémoire la valeur du compteur relevée.

Pour le réglage de la position de fin de course opposé, les opérations sont inversées.

On constate que l'on réalise bien ainsi un réglage à distance de la position des fins de course et que l'on peut donc éviter toute intervention sur l'organe mobile lui-même.

Ledit dispositif d'entraînement comprend en outre, éventuellement, pour favoriser le fonctionnement desdits moyens de traitement 30, une alimentation stabilisée entre ceux-ci et ladite ligne d'alimentation 35.

Il comprend en outre, éventuellement, des moyens de conversion analogique/numérique prévus entre lesdits moyens de traitement numériques 30 et lesdits moyens de sélection 31 du mode de fonctionnement desdits moyens de traitement 30. Lesdits moyens de conversion comprennent, entre autres, un diviseur de tension, un redresseur et/ou un filtre.

La présente invention concerne également un tambour de volet roulant, équipé du dispositif d'entraînement décrit ci-dessus.

Comme déjà évoqué, le moteur 10 entraîne par l'intermédiaire du réducteur 22 le tambour 2 destiné à permettre l'enroulement/déroulement du tablier du volet roulant faisant également l'objet de l'invention.

Le moyen support 100, le bouchon 102 et les éléments prévus à l'intérieur dudit moyen support, à l'exception du rotor du moteur et du réducteur sont prévus fixes.

Ledit tambour 2, ladite bague 3 et ladite pièce 105 de transmission sont mobiles en rotation.

Lesdits moyens de coopération entre ladite bague 3 et ledit tambour 2 sont constitués, notamment, d'une rainure 107 et d'une clavette 108 prévues sur ces éléments.

Naturellement, d'autres modes de mise en oeuvre à la portée de l'homme de l'art, auraient pu être envisagés sans pour autant sortir du cadre de l'invention, tel que défini dans les revendications.

## Revendications

1. Dispositif d'entraînement d'un organe tubulaire (2), notamment tambour de volet roulant, mobile en rotation bi-directionnellement autour de son axe longitudinal, comprenant des moyens moteurs (10, 22) pour la rotation dudit organe mobile (2), des moyens de commande (19, 30) desdits moyens moteurs en fonction d'informations provenant au moins dudit système de contrôle de la position de l'organe mobile, et un système de contrôle de la position dudit organe mobile (2), ledit système, comprenant des premiers moyens (4) pour créer un signal physique périodique et des seconds moyens (5) pour détecter sans contact les variations dudit signal, l'un desdits premiers ou seconds moyens (4, 5) étant prévu entraîné, directement ou indirectement, par ledit organe mobile (2) et l'autre desdits premiers ou seconds moyens (4, 5) étant prévu fixe en vis-à-vis,
**caractérisé en ce que** ledit dispositif d'entraînement est constitué d'un moyen support (100) destiné à être introduit dans ledit organe mobile (2) pour permettre sa rotation, ledit moyen support (100), prévu tubulaire, accueillant intérieurement, lesdits moyens moteurs (10,22), ledits moyens de commande (19,30) et l'un (5) desdits premiers ou seconds moyens dudit système de contrôle de la position de l'organe mobile,
**en ce que** l'autre (4) desdits premiers ou seconds moyens est monté, en vis-à-vis, mobile en rotation, autour dudit moyen support tubulaire (100) de manière à pouvoir coopérer avec ledit organe mobile (2),
et **en ce que** les premiers et seconds moyens (4, 5) sont aptes à repérer le sens de description de la période.

2. Dispositif selon la revendication 1, caractérisé en en ce que lesdits premiers moyens (4) sont montés, mobiles en rotation autour dudit moyen support (100) tubulaire et sont constitués d'une succession de pôles d'aimants (6) répartis de manière circulaire autour d'un axe destiné à définir l'axe de rotation (7) de l'organe mobile (2), lesdits seconds moyens (5) pour détecter sans contact le signal et pour repérer le sens de description de la période sont constitués d'au moins deux capteurs (9a, 9b) de flux magnétique espacés de manière à pouvoir repérer deux successions de signaux différents en fonction du sens de déplacement de l'organe mobile (2), lesdits premiers moyens (4) pour créer le signal étant prévus au niveau d'une bague (3) constituée d'une succession de pôles nord et/ou sud d'aimants, répartis en couronne, selon l'axe longitudinal de la bague, ladite bague (3) étant prévue tournante par rapport audit moyen tubulaire (100), lesdits capteurs (9a, 9b) étant prévus disposés intérieur à ladite bague (3).

3. Dispositif selon la revendication 2, dans lequel lesdits aimants (6) sont répartis régulièrement et/ou sont prévus jointifs.

4. Dispositif selon la revendication 1, dans lequel lesdits capteurs (9a, 9b) sont prévus disposés radialement, intérieurement et/ou extérieurement auxdits moyens de création (4) du signal et/ou axialement.

5. Dispositif selon la revendication 2, dans lequel lesdits moyens (4) pour créer le signal sont prévus au niveau de la bague (3), constituée au moins en partie d'un matériau apte à subir une aimantation par induction pour définir une succession de pôles nord et/ou sud d'aimants, répartis en couronne, selon l'axe longitudinal de ladite bague (3)..

6. Dispositif selon la revendication 2, dans lequel ladite bague (3) est munie de moyens (101) pour coopérer avec ledit organe mobile (2) de manière à ce que ses mouvements soient l'image des mouvements dudit organe mobile (2).

7. Dispositif selon la revendication 6, dans lequel lesdits moyens (5) pour détecter les variations du signal et pour repérer le sens de description de sa période sont prévus à l'intérieur dudit moyen support.

8. Dispositif selon les revendications 1 ou 7, dans lequel lesdits moyens (4) pour créer le signal et lesdits moyens (5) pour détecter les variations du signal et pour repérer le sens de description de sa période sont prévus à l'une des extrémités dudit moyen support (100), dit première extrémité.

9. Dispositif selon la revendication 8, dans lequel ladite première extrémité est munie d'un bouchon (102) pour ledit moyen support (100).

10. Dispositif selon la revendication 9, dans lequel un joint d'étanchéité (103) est prévu entre ledit bouchon et ledit moyen support (100).

11. Tambour de volet roulant muni d'un dispositif d'entraînement selon la revendication 1.

12. Volet roulant, équipé du tambour selon la revendication 11.

## Patentansprüche

1. Vorschubeinrichtung eines röhrenförmigen Organs (2), insbesondere einer Trommel für Rolladen, die in Drehung in beide Richtungen um ihre Längsachse beweglich ist, umfassend Motormittel (10, 22) für die Drehung des besagten beweglichen Organs (2), Mittel zum Steuern (19, 30) der besagten Motormittel in Abhängigkeit von Informationen, die wenigstens durch das besagte System zur Kontrolle der Position des beweglichen Organs geliefert werden, und ein System zur Kontrolle der Position des besagten beweglichen Organs (2), wobei das besagte System erste Mittel (4), um ein periodisches physisches Signal zu schaffen, und zweite Mittel (5), um die Veränderungen des besagten Signals kontaktlos festzustellen, umfaßt, wobei vorgesehen ist, daß eines von den besagten ersten oder zweiten Mitteln (4, 5) durch das besagte bewegliche Organ (2) direkt oder indirekt angetrieben wird, und das andere von den besagten ersten oder zweiten Mitteln (4, 5) unbeweglich gegenüberliegend vorgesehen ist,
**dadurch gekennzeichnet, daß** die besagte Vorschubeinrichtung durch ein Trägermittel (100) gebildet ist, vorgesehen, in das besagte bewegliche Organ (2) eingeführt zu werden, um seine Drehung zu erlauben, wobei das besagte röhrenförmig vorgesehene Trägermittel (100) innerlich die besagten Motormittel (10, 22), die besagten Steuermittel (19, 30) und das eine (5) von den besagten ersten oder zweiten Mitteln des besagten Systems zur Kontrolle der Position des beweglichen Organs aufnimmt,
daß das andere (4) von den besagten ersten oder zweiten Mitteln gegenüberliegend beweglich in Drehung um das besagte röhrenförmige Trägermittel (100) gelagert ist, derart, um mit dem besagten beweglichen Organ (2) zusammenwirken zu können, und
daß die ersten und die zweiten Mittel (4, 5) geeignet sind, die Beschreibungsrichtung der Periode zu bezeichnen.

2. Vorrichtung nach Anspruch 1, **dadurch gekennzeichnet, daß** die besagten ersten Mittel (4) beweglich in Drehung um das besagte röhrenförmige Trägermittel (100) gelagert sind und durch eine Reihenfolge von Magnetpolen (6) gebildet sind, die kreisförmig um eine Achse verteilt sind, die vorgesehen ist, die Drehachse (7) des beweglichen Organs (2) zu bilden, wobei die besagten zweiten Mittel (5), um das Signal kontaktlos festzustellen und um die Beschreibungsrichtung der Periode zu bezeichnen, durch wenigstens zwei Magnetflußsensoren (9a, 9b) gebildet sind, die beabstandet sind, derart, um zwei Reihenfolgen unterschiedlicher Signale in Abhängigkeit von der Verschiebungsrichtung des beweglichen Organs (2) bezeichnen zu können, wobei die besagten ersten Mittel (4), um das Signal zu schaffen, im Bereich eines Rings (3) vorgesehen sind, der durch eine Reihenfolge von magnetischen Nordund/oder Südpolen gebildet ist, die nach der Art einer Krone nach der Längsachse des Rings verteilt sind, wobei der besagte Ring (3) rotierend hinsichtlich des besagten röhrenförmigen Mittels (100) vorgesehen ist, und die besagten Sensoren (9a, 9b) sich innerlich des besagten Rings (3) befindend vorgesehen sind.

3. Vorrichtung nach Anspruch 2, bei der die besagten Magneten (6) regelmäßig verteilt und/oder dicht anliegend vorgesehen sind.

4. Vorrichtung nach Anspruch 1, bei der die besagten Sensoren (9a, 9b) an den besagten Mitteln (4) zur Schaffung des Signals radial angeordnet, innerlich und/oder äußerlich, und/oder axial vorgesehen sind.

5. Vorrichtung nach Anspruch 2, bei der die besagten Mittel (4), um das Signal zu schaffen, im Bereich des Rings (3) vorgesehen sind, der wenigstens zum Teil aus einem Material gebildet ist, das geeignet ist, einer Magnetisierung durch Induktion unterzogen zu werden, um eine Reihenfolge von magnetischen Nord- und/oder Südpolen zu bilden, die nach der Art einer Krone nach der Längsachse des besagten Rings (3) verteilt sind.

6. Vorrichtung nach Anspruch 2, bei welcher der besagte Ring (3) mit Mitteln (101) ausgestattet ist, um mit dem besagten beweglichen Organ (2) zusammenzuwirken, derart, daß seine Bewegungen das Bild der Bewegungen des besagten beweglichen Organs (2) sind.

7. Vorrichtung nach Anspruch 6, bei der die besagten Mittel (5), um die Veränderungen des Signals festzustellen und um die Beschreibungsrichtung seiner Periode zu bezeichnen, im Inneren des besagten Trägermittels vorgesehen sind.

8. Vorrichtung nach Ansprüchen 1 oder 7, bei der die besagten Mittel (4), um das Signal zu schaffen, und die besagten Mittel (5), um die Veränderungen des Signals festzustellen und um die Beschreibungsrichtung seiner Periode zu bezeichnen, an einem der Enden des besagten Trägermittels (100) vorgesehen sind, das als erstes Ende bezeichnet wird.

9. Vorrichtung nach Anspruch 8, bei der das besagte erste Ende mit einem Stöpsel (102) für das besagte Trägermittel (100) ausgestattet ist.

10. Vorrichtung nach Anspruch 9, bei der ein Dichtring (103) zwischen dem besagten Stöpsel und dem besagten Trägermittel (100) vorgesehen ist.

11. Trommel für Rolladen, die mit einer Vorschubeinrichtung nach Anspruch 1 ausgestattet ist.

12. Rolladen, der mit der Trommel nach Anspruch 11 ausgestattet ist.

## Claims

1. A driving system for a tubular member (2), notably a roller blind drum, mobile in bi-directional rotation around its longitudinal axis, comprising motorised means (10, 22) for the rotation of said mobile element (2), means (19, 30) for controlling said motorised means in relation to information issued from at least said position control system of the mobile element, and a system for controlling the position of said mobile element (2), said system including first means (4) for creating a periodic physical signal and second means (5) for detecting the variations of said signal without any contact, whereas one of said first or second means (4, 5) is provided to be driven, directly or indirectly, by said mobile element (2) and the other of said first or second means (4, 5) is provided to be fixed and opposite,
**characterised in that** said driving device is composed of a supporting means (100) intended to be inserted into said mobile element (2) to enable the rotation thereof, whereas said supporting means (100) provided as tubular, houses internally said motorised means (10, 22), said control means (19, 30) and one (5) of said first or second means of said position control system of the mobile element,
**in that** the other (4) of said first or second means is mounted, opposite, mobile in rotation, around said tubular supporting means (100) in order to be able to co-operate with said mobile element (2),
and **in that** the first and second means (4, 5) are able to locate the description direction of the period.

2. A device according to claim 1, **characterised in that** said first means (4) are mounted, mobile in rotation around said supporting tubular means (100) and are composed of a succession of magnetic poles (6) distributed in a circular fashion around an axis intended to define the rotational axis (7) of the mobile element (2), said second means (5) for detecting without any contact the signal and for locating the description direction of the period are composed of at least two magnetic flux sensors (9a, 9b) spaced in order to locate two successions of different signals relative to the displacement direction of the mobile element (2), said first means (4) intended for creating the signal being provided close to a ring (3) formed of a succession of north/south magnetic poles, distributed in a crown pattern, along the longitudinal axis of the ring, said ring (3) being provided to rotate relative to said tubular means (100), said sensors (9a, 9b) being arranged inside said ring (3).

3. A device according to claim 2, wherein said magnets (6) are distributed regularly and/or are provided as contiguous.

4. A device according to claim 1, wherein said sensors (9a, 9b) are arranged radially, internally and/or externally to said signal creation means (4) and/or axially.

5. A device according to claim 2, wherein said signal creation means (4) are provided close to the ring (3), composed at least partially of a material capable to be subjected to induction magnetisation in order to define a succession of north and/or south magnetic poles, distributed in a crown pattern, along the longitudinal axis of said ring (3).

6. A device according to claim 2, wherein said ring (3) is fitted with means (101) intended to co-operate with said mobile element (2) so that the movement thereof reflect the movements of said mobile element (2).

7. A device according to claim 6, wherein said means (5) intended to detection the variations of the signal and to locate the description direction of its period are provided inside said supporting means.

8. A device according to claims 1 or 7, wherein said signal creation means (4) and said means (5) intended for detecting the signal variations and for locating the description direction of its period are provided at one of its ends of said supporting means (100), so-called first end.

9. A device according to claim 8, wherein said first end is fitted with a plug (102) for said supporting means (100).

10. A device according to claim 9, wherein a sealing joint (103) is provided between said plug and said supporting means (100).

11. A roller blind drum fitted with a driving device according to claim 1.

12. A roller blind, fitted with the drum according to claim 11.
